# EUROPÄISCHE PATENTSCHRIFT

(11) **EP 1 117 083 B1**
(45) Veröffentlichungstag und Bekanntmachung des Hinweises auf die Patenterteilung: **02.02.2005**
(21) Anmeldenummer: 00124556.2
(22) Anmeldetag: 09.11.2000
(51) Int. Cl.: G08G 1/09, H04L 12/56

(54) **Verfahren zur dezentralen Übertragung und Verteilung von Nutzdaten zwischen Teilnehmern eines Telekommunikationsnetzwerkes**
Method for decentralized transmission and distribution of payload data between users of a telecommunications network
Procédé pour la transmission décentralisée et la distribution de données utiles entre les utilisateurs d'un réseau de télécommunications

(30) Priorität: 13.01.2000 DE 10001098
(43) Veröffentlichungstag der Anmeldung: 18.07.2001
(73) Patentinhaber: Definiens AG, 80339 München (DE)
(72) Erfinder: Kiendl, Robert, D-81541 München (DE)
(74) Vertreter: Winter, Brandl, Fürniss, Hübner, Röss, Kaiser, Polte Partnerschaft

(56) Entgegenhaltungen:
- US-A- 5 323 394
- US-A- 5 537 394
- CAMARA D ET AL: "A Novel Routing Algorithm for Ad Hoc Networks" PROCEEDINGS OF THE 33RD ANNUAL HAWAII INTERNATIONAL CONFERENCE ON SYSTEM SCIENCES, PROCEEDINGS OF HICSS33: HAWAII INTERNATIONAL CONFERENCE ON SYSTEM SCIENCES, MAUI, HI, USA, 4-7 JAN. 2000, Bd. 2, Seiten 1-8, XP001074699 2000, Los Alamitos, CA, USA, IEEE Comput. Soc, USA ISBN: 0-7695-0493-0
- SCHOONDERWOERD R ET AL: "ANT-LIKE AGENTS FOR LOAD BALANCING IN TELECOMMUNICATIONS NETWORKS" PROCEEDINGS OF THE FIRST INTERNATIONAL CONFERENCE ON AUTONOMOUS AGENTS MARINA DEL REY, CA., FEB. 5 - 8, 1997, PROCEEDINGS OF THE INTERNATIONAL CONFERENCE ON AUTONOMOUS AGENTS, NEW YORK, ACM, US, Bd. CONF. 1, 5. Februar 1997 (1997-02-05), Seiten 209-216, XP000775152 ISBN: 0-89791-877-0

## Beschreibung

Die Erfindung betrifft ein Verfahren zur dezentralen Übertragung und Verteilung von Nutzdaten zwischen Teilnehmern eines eine Vielzahl von mobilen und/oder stationären Teilnehmern aufweisenden, selbstverwaltenden Telekommunikationsnetzwerkes, gemäß dem Oberbegriff des Anspruchs 1.

Insbesondere bezieht sich die Erfindung auf ein Verfahren zur dezentralen Optimierung von Informationstransport in kapazitätsbegrenzten Telekommunikationsnetzwerken sowie zum dezentralen und dynamischen Durchführen von Telekommunikationsmanagementfunktionen, wie beispielsweise der Teilnehmerverzeichnisverwaltung, dem Verbindungsaufbau, dem Routing und Korrekturmechanismen.

Telekommunikationsnetzwerke, die eine Vielzahl von mobilen und/oder stationären Teilnehmern aufweisen, sind heute gewöhnlich mit Zentralstellen versehen, über welche die Vermittlung und Leitung der gewünschten Kommunikationsverbindungen erfolgt. Bei den modernen Mobilfunksystemen mit zellularer Netzstruktur ist jeder Funkzelle eine als Sende- und Empfangseinrichtung ausgebildete, sogenannte Basisstation zugeordnet, über welche die Nachrichtenverbindungen zu den sich innerhalb dieser Funkzelle aufhaltenden Teilnehmern abgewikkelt werden. Der technische Aufwand in zellularen Systemen für viele Teilnehmer ist jedoch enorm, da sich die Anzahl der Funkzellen hauptsächlich nach dem Sprechverkehrsaufkommen, das auf einer definierten Fläche zu erwarten und insbesondere in Ballungsgebieten sehr hoch ist, und dem maximal möglichen Frequenzwiederholungsfaktor richtet. Nachteilig bei derartigen zentralen Telekommunikationsnetzwerken ist auch die feste Installation der Systemeinrichtungen, wodurch sich hohe Anschaffungskosten und eine nicht allzu hohe Flexibilität insbesondere bei Systemen für mobile Teilnehmer ergeben.

Im Zusammenhang mit Verkehrsleitsystemen für Fahrzeuge sind verschiedene Verfahren zur Übertragung von Daten vorgeschlagen und bekannt geworden, auf die im folgenden eingegangen werden soll.

Aus EP 0 715 286 A1 ist ein Verfahren zur Reduzierung einer aus den Fahrzeugen einer Stichprobenfahrzeugflotte an einen Zentralrechner zu übertragenden Datenmenge bekannt. Dabei werden Fahrzeugdaten vor der Weiterleitung von Stichprobendaten an den Zentralrechner lokal in einer Austauschgruppe von Fahrzeugen, die sich in gegenseitiger Funkreichweite befinden, gemittelt, um dann von einem ausgewählten Fahrzeug an den Zentralrechner übertragen zu werden. Es handelt sich hierbei jedoch nicht um ein global dezentral organisiertes Informationsnetzwerk, sondern nur um eine einstufige Vorprozessierung im Hinblick auf eine Datenübergabe an einen Zentralrechner, der dann alle global relevanten Verarbeitungsfunktionalitäten erfüllt.

In WO 9 926 212 A1 ist ein Verfahren zur Signalisierung von lokalen Verkehrsstörungen beschrieben. Dabei erfolgt die Informationsverarbeitung der verkehrsrelevanten Daten dezentral in miteinander lokal per Fahrzeug-Fahrzeug-Kommunikation verbundenen Fahrzeugen durch Bildung expliziter Fahrzeuggruppen und -übergruppen. Für die Konsistenz der Gruppenverwaltung wird hierbei ein Gruppensprecher als vorteilhaft angegeben.

In DE 199 03 909 A1 wird ein dezentrales, selbstorganisierendes Verkehrsleitsystem vorgeschlagen, das sich ebenfalls auf eine dezentrale Fahrzeug-Fahrzeug-Kommunikation zur Ausbildung eines Kommunikationsnetzwerkes stützt. Dabei wird das Problem der effizienten langreichweitigen informationsmäßigen Bindung der Fahrzeuge zur Ausbildung eines funktionalen Netzwerkes durch einen Anfrage(Request)- und Caching-Mechanismus gelöst. Das Kommunikations- und Verarbeitungsvolumen wird hierbei durch erfordernisinduzierte adaptive Bildung von Quellen-, Informationsund Transporthierarchien optimiert. Dies dient der effizienten Bündelung von Quellendaten, Informationsstrukturen und Übertragungsvorgängen. Die Hierarchisierung erfolgt dabei nicht zwingend durch Ausbildung expliziter diskreter Gruppen, die einen ausgewählten Gruppensprecher erfordern, sondern vorzugsweise implizit und kontinuierlich durch Informationspotentiale, z.B. durch ein die Informationsvollständigkeit betreffendes Kriterium, woraus sich ein hohes Maß an Stabilität und Redundanz ergibt. Neben dem Aspekt der induzierten Bündelung sorgt der bereits angesprochene Anfrage(Request)-und Caching-Mechanismus für die nötige globale Rückkopplung, um auf dem Netzwerk auch fortgeschrittene Formen verteilter Informationsverarbeitung wie z.B. verteilte Simulative-Prediction, Langzeitintegration, Statistikbildung etc. durchführen zu können, die sonst eine Zentralverarbeitungsinstanz erfordern würden. Das hier vorgeschlagene Verfahren zur Gewinnung von relevanter Verkehrsinformation und zur dynamischen Routenoptimierung kann auch einen Einsatz von sogenannten Pseudo-Fahrzeugen umfassen, die nur einen kommunikativen Zweck haben können, und eine Übermittlung von nicht zwangsweise verkehrsbezogenen "Dritt-Daten", was in Verbindung mit der Verkehrsleitung die Realisierung eines allgemeinen dezentralen Mobilfunk-Telekommunikationsnetzwerkes einschließlich eines dezentralen Telekommunikationsmanagements ermöglicht.

Beim Verfahren nach DE 199 03 909 A1 wird über der Fahrzeug-Szenerie demnach ein dynamisches iteratives Telekommunikationsnetzwerk errichtet, um am Ende eine optimale Steuerung der Fahrzeuge zu erhalten. Es ist dazu ein effizienter Informationstransport erforderlich, um eine gute langreichweitige Vernetzung zu schaffen. Dieses Problem wird dort dadurch gelöst daß die iterative Funkkommunikation versucht, möglichst kurze geometrische Wege zu überbrücken. Ein iterativ übertragenes Anfrage(Request)-Datenpaket reist z.B. auf einer geometrisch möglichst direkten "Luftlinie" in das/die Zielgebiet/e, soweit die Fahrzeugplazierungssituation dies zuläßt. Dieses Vorgehen ist ausreichend und sinnvoll, solange die Kommunikationspfade selbst nicht überlastet sind und nicht aus zu stark diskontinuierlich strukturierten Kommunikationsressourcen gewählt werden müssen.

Ein Verfahren zum dezentralen Übertragen und Verteilen von Nutzdaten zwischen Teilnehmern eines eine Vielzahl von mobilen und/oder stationären Teilnehmern aufweisenden, selbstverwaltenden Telekommunikationsnetzwerks oder Telekommunikationsteilnetzwerks nach dem Oberbegriff des Anspruchs 1 ist aus Câmara D. et al.: "A NOVEL ROUNTING ALGORITHM FOR AD HOC NETWORKS", Proceedings of HICSS33, Hawaii International Conference on System Sciences, Maui, USA, 4. bis 7. Januar 2000, Bd. 2, Seiten 1 bis 8, Los Alamitos, CA, USA, IEEE Comp. Soc., USA, ISBN: 0-7695-0493-0 bekannt.

Die Aufgabe der Erfindung besteht darin, in einem kapazitätsbegrenzten oder/und strukturierten Telekommunikationsnetzwerk den Informationstransport zwischen Teilnehmern dezentral im Hinblick auf die Routen zu optimieren und dabei Übertragungskanäle optimal auszunutzen.

Diese Aufgabe wird mit den in Anspruch 1 angegebenen Maßnahmen gelöst.

Sofern für die relevanten Netzwerkstrukturdaten Ortsinformationen von Teilnehmern/Übermittlungseinheiten benötigt werden, können diese z. B. durch GPS (Global Positioning System) geliefert werden. Da in der Regel eine exakte Ortsinformation für Routing,
Adressierung und andere Dienste nicht notwendig ist, ist es auch denkbar, daß ungenauere Ortsinformationen aus einem Zusammenspiel von topologischen Nachbarschaftsinformationen der Teilnehmer, Empfangsfeldstärken, Anzahlen von Weiterleitungen und dergleichen gewonnen werden können.

Es wird für zu übertragende Datenpakete bzw. einen zu übertragenden Datenstrom ein optimaler Weg durch ein begrenztes oder/und strukturiertes Telekommunikationsnetzwerk geschaffen, analog zur optimalen selbstorganisierenden Navigation von Fahrzeugen in einem Straßenverkehrsnetzwerk. Bei einem Einsatz des hierin offenbarten Verfahrens innerhalb des in DE 199 03 909 A1 vorgeschlagenen Verfahrens zur Gewinnung von relevanter Verkehrsinformation und zur dynamischen Routenoptimierung entstünde mit Fahrzeugen/Handys als Kommunikator somit ein selbstorganisierendes Navigationssystem zweiter Ordnung, wobei Fahrzeugbewegungen durch eine Kommunikation erster Ordnung optimiert würden und die Kommunikation erster Ordnung durch eine Kommunikation zweiter Ordnung optimiert würde.

In diesem Zusammenhang ist anzumerken, daß auch eine sinnvolle Anwendung denkbar ist, bei der das hierin offenbarte Verfahren wiederum auf sich selbst angewendet wird, es also allgemein zu einer selbstorganisierenden Bewegungs- und Kommunikationsoptimierung n-ter Ordnung kommt. Derartige Anwendungen sollen im Rahmen der Erfindung miteingeschlossen sein.

Bei dem hierin offenbarten selbstorganisierenden Kommunikationsoptimierungsverfahren nimmt der Informationstransport auf sich selbst Rücksicht.

Zweckmäßige und vorteilhafte Weiterbildungen des Verfahrens nach der Erfindung sind in den Unteransprüchen angegeben.

Die Erfindung und Weiterbildungen sowie Anwendungsfälle davon werden im folgenden anhand von Zeichnungen erläutert. Es zeigen:
Fig. 1 in einer schematischen Darstellung eines Telekommunikationsnetzwerkes mögliche Kommunikationsrouten zwischen zwei Endpunkten,
Fig. 2 ebenfalls in einer schematischen Darstellung Funkstrecken eines Telekommunikationsnetzwerkes, das Hindernisse oder Lücken aufweist,
Fig. 3 das Beispiel eines dezentral organisierten, linienstrukturierten (Fest)netzwerkes, und
Fig. 4 ein Beispiel für eine kontinuierliche Kartenstruktur mit Kommunikationsmomentenfeldern.

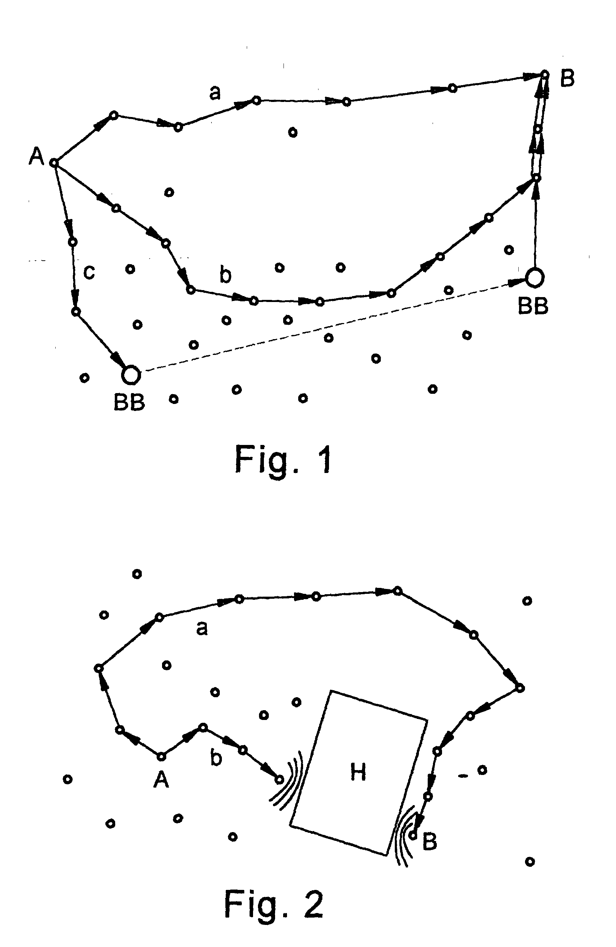

In einem dezentralen Mobilfunk-Telekommunikationsnetzwerk bestehen zwischen den durch Handys oder Pseudo-Fahrzeugen gebildeten Teilnehmern gewöhnlich begrenzte Kommunikationsressourcen. In Fig. 1 sind in einem Szenario zur iterativen dezentralen Funkkommunikation mögliche Kommunikationsrouten zwischen zwei Endpunkten A und B in einem Telekommunikationsnetzwerk mit einer Vielzahl von Teilnehmern dargestellt, die in Form kleiner Kreise veranschaulicht sind. Eine erste Verbindungsroute a verläuft über eine im statischen Falle optimale Route. Wenn sehr viele Kommunikationsverbindungen im Telekommunikationsnetzwerk gleichzeitig errichtet werden, kann jedoch die Verbindungsroute a über den ausgedünnten Bereich von Teilnehmern hinweg zum Engpaß werden. In diesem Falle wäre die Verbindungsroute b geeigneter oder aber sogar, wenn ein Backbone-Netzwerk mit günstig gelegenen Stationen BB entsprechend freie Kapazität hat, die längere Verbindungsroute c. Das Problem besteht zudem gewöhnlich darin, überhaupt Verbindungen von einem Teilnehmer zu einem anderen Teilnehmer dezentral auszukundschaften sowie dezentral eine optimale Lastverteilung für das Telekommunikationsnetzwerk zu finden.

Bei der bloßen dynamischen Verbindungsroutenoptimierung mit einer ausreichenden Anzahl an Fahrzeug-Teilnehmern finden sich bei einem stark strukturierten Telekommunikationsnetzwerk in einem selbstorganisierenden Verkehrsnavigationssystem, das dem nach DE 199 03 909 A1 entspricht, immer geometrisch geeignet positionierte Fahrzeug-Teilnehmer für eine Datenweiterleitung in ein bestimmtes Zielgebiet. Befinden sich jedoch größere Hindernisse oder Lücken in einer direkten iterativen Funkstrecke, so kann es sich ergeben, daß zwischen den zwei Teilnehmern A und B ein direkter Kommunikationsversuch, wie bei der Route b in Fig. 2 an einem Funkhindernis H, in einer Sackgasse endet, aus der ein einfaches, geometrisch getriebenes Routing möglicherweise gar nicht mehr herauskommt und wenigstens temporär keine Verbindung hergestellt werden kann, da zumindest ein aufwendiger Suchprozeß, der sich voll im Kommunikationsvolumen niederschlägt, extrem ineffizient und langsam ist. Durch das hierin offenbarte Verfahren wird die zwar einen Umweg darstellende, aber kommunikationstaugliche Verbindungsroute a zwischen den Teilnehmern A und B problemlos aufgefunden.

Auch für eindimensional unterstrukturierte Verbindungsnetzwerke, z.B. bei der leitungsstrukturierten Kommunikation in Festnetzen, Richtfunkstrecken, Internet oder dergleichen, kann ein dezentrales dynamisches Verteilungsmanagement sinnvoll sein. Im heutigen Internet bzw. in Telekommunikations-Routern funktioniert das Routing von Datenpaketen aufgrund von vorberechneten Routing-Tabellen. Wenn ein Datenpaket an einem Router auf einer zuführenden Leitung ankommt, wird die Zieladresse des Datenpakets vom Router gelesen, der sich daraufhin aufgrund einer Routing-Tabelle entscheidet, auf welcher wegführenden Leitung dieses Datenpaket weiter in Richtung zum Ziel transportiert wird. Dabei können die Datenpakete auch statistisch auf alternative Leitungen verteilt werden, wobei die Gewichtswerte vorberechnet sind. Es besteht auch die Möglichkeit, z.B. bei Leitungsdefekten automatisch Routing-Einträge aus den Tabellen zu entfernen. Die Erstellung der Routing-Tabellen erfolgt aber nach dem Stand der Technik durch nichtautomatische manuelle Überlegungen oder globale zentrale Berechnungen. Verfahren zur vollautomatischen dynamischen dezentralen Erstellung der Routing-Tabellen sind bisher nicht bekannt.

Das hierin offenbarte Verfahren läßt sich in vorteilhafter Weise dazu verwenden, die Auslastungsoptimierung eines derartigen eindimensional unterstrukturierten Netzwerkes vollautomatisch, dynamisch und dezentral durchzuführen. Ebenso ist es möglich, damit dezentral Kommunikationsmanagement-Funktionen auszuführen, ohne auf explizite zentrale Verzeichnisse angewiesen zu sein. Im heutigen Internet z.B. werden Rechner aufgrund von Name/IP(Internet Protokoll)-Adressenzuordnung-Anfragen gefunden, welche am Ende immer auf sogenannte statisch plazierte Root-Name-Server heruntergebrochen werden, wobei alle verteilt abgespeicherten Informationen Cache-Daten der Root-Server sind. Die IP-Adressen sind aufgrund der statischen Beschaffenheit des Routings mit Netzwerksegmenten und damit mit dem Ort verknüpft. Dadurch sind dynamische Änderungen der Struktur, wie z.B. ein Umzug eines "benannten" Rechners sehr schwierig und stets mit manuellen Konfigurationseingriffen verbunden. Das hierin offenbarte Verfahren ermöglicht es dagegen in vorteilhafter Weise, Managementfunktionen von Natur aus dezentral und dynamisch zu erledigen, ohne daß eine zentrale Bindung erforderlich ist.

Bei dem in DE 199 03 909 A1 vorgeschlagenen Verkehrsleitverfahren besteht die Funktionalität der dynamischen Fahrzeug-Routenoptimierung aus einem iterativen Wechselspiel zwischen der Informationsgewinnung und einer sich darauf stützenden Kurzweg-Suche in einer "individuellen Straßenkarte" aufgrund des veränderten Kenntnisstandes, einer sich daraus ergebenden erneuten Informationsgewinnung, und so weiter. Bei dem hierin offenbarten Verfahren wird die Optimierung der Kommunikation in einem Telekommunikationsnetzwerk aus einem vergleichbaren Wechselspiel erhalten. Die Kommunikationspfade oder -momentenfelder mit Pfadqualitätsgewichtungen/Momentenfeldstärken und anderen Netzwerkstrukturdaten sind in individuellen Karten oder Verzeichnissen der Teilnehmer verzeichnet. Bei einer iterativen Weiterleitung von Datenpaketen wird aufgrund einer Kurzweg-Suche in dieser Karte oder diesem Verzeichnis die optimale Weiterleitung vorherbestimmt und empfohlen. Gleichzeitig wird eine Kommunikation zweiter Ordnung (Explorer-Kommunikation) betrieben, welche für eine adaptive, anforderungsgetriebene Generierung und Aktualisierung der Karten und Verzeichnisse sorgt.

Für die vorläufig als optimal angesehene Weiterleitungsroutensegmente/Momentenraumausschnitte werden "Explorer"-Anfragen (Requests) abgeschickt. Diese werden auf dem Telekommunikationsnetzwerk aufgrund der bestehenden individuellen Karten bzw. Verzeichnisse geroutet. Im ungünstigsten Falle würden solche "Explorer"-Anfragen bis in die Zielgebiete weitergeleitet. Die dort befindlichen Teilnehmer wissen aufgrund der Kommunikationshistoriendaten über die lokale Auslastungssituation, Verbindungsqualität und weitere Übertragungsmerkmale Bescheid. Aufgrund einer dezentralen Abstimmung der Auswahl einer geeigneten Weiterleitung (Delay Routing) erfolgt eine Antwort auf die "Explorer"-Anfrage. Die Antwort wird zurückgeleitet. Bei der Rückleitung werden die Antworten von den übermittelnden Teilnehmern sowie von allen Teilnehmern, die auch davon Kenntnis bekommen, cache-gespeichert. Wenn nun weitere "Explorer"-Anfragen von anderen Teilnehmern eintreffen und die Aktualität der Daten im Cache-Speicher ausreicht, um die "Explorer"-Anfragen zu beantworten, braucht die "Explorer"-Anfrage nicht mehr repetiert zu werden, sondern kann direkt aus dem Cache-Speicher beantwortet werden. Dieser Mechanismus wirkt selbststabilisierend, da bei großem Kommunikationsaufkommen eine große Anzahl gleichartiger "Explorer"-Anfragen anfällt, die dann nur noch sehr selten bis ins Zielgebiet laufen müssen. Bei Speicherknappheit kann ein Teilnehmer jeweils veraltete Daten aus dem Cache-Speicher entfernen.

In den Anfragen kann eine Aktualitätsanforderung eincodiert sein, die sich aus einer Gewichtigkeitsabschätzung ergibt, die insbesondere häufige Engpässe (Datenstaupotential), die Bandbreite von Routenabschnitten und die Entfernung vom Anfrageort betrifft.

Freie Rechenzeit und Übertragungskapazität können dazu genutzt werden, um Cache-Daten inhaltlich zusammenzufassen (Datenkompression). Eine solche Integration ist z.B. sehr sinnvoll, um Karten- und Verzeichnisdaten zu hierarchisieren. Anstelle von voll aufgelösten Routensegmenten zwischen einzelnen Kommunikatoren wird eine Zusammenfassung zu aggregierten Teilnetz-Aussagen bzw. gröber aufgelösten Momentenfeldern vorgenommen.

Es ist festzustellen, daß die Kommunikation zweiter Ordnung volumenmäßig in der Regel kleiner als die Kommunikation der ersten Ordnung ist. Die dynamischen Veränderungen der Netzwerkstruktur spielen sich auf einer wesentlich langsameren Zeitskala ab als Kommunikationsprozesse der ersten Ordnung. Dadurch erfolgen die Kommunikationsprozesse der zweiten Ordnung, also "Explorer"-Anfragen (Requests), Antworten (Answers), Broadcasts, welche die Netzwerkstruktur in den individuellen Karten und Verzeichnissen widerspiegeln sollen, vergleichsweise selten. Durch eine Explorer-Kommunikation mit einigen Prozent Anteil an der Gesamtkommunikationsrate werden eine Auslastungsoptimierung und Nutzmanagement-Funktion gewonnen.

Bei dem hierin offenbarten Verfahren können die Kommunikation zweiter Ordnung und die Kommunikation erster Ordnung auf dem gleichen Telekommunikationsnetzwerk stattfinden. Aussendungen zweiter Ordnung lassen sich teilweise auch in Aussendungen erster Ordnung verpacken. Beispielsweise können beim Übertragen von Nutzdaten in die gleichen Aussendungen immer auch Netzstrukturdaten mit verpackt werden.

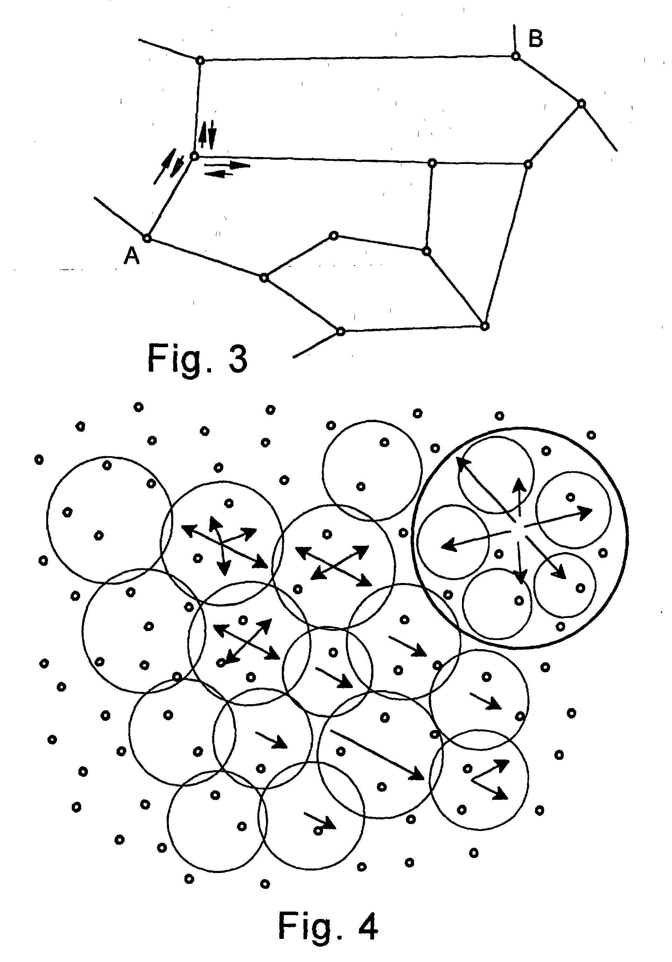

In Fig. 3 ist ein einfaches Beispiel eines dezentral organisierten, linienstrukturierten (Fest)netzwerkes anschaulich dargestellt. Jeder der jeweils durch einen kleinen Kreis symbolisierten Teilnehmer und/oder Weiterleitungsstandorte, die sich an Routing-Knotenstellen in diesem Mobilfunk-Netzwerk befinden und von denen zwei herausgegriffen und mit A und B bezeichnet sind, verfügt über eine mehr oder weniger grob aufgelöste Karte dieses Netzwerkes. Die Karte kann auch in Verzeichnisform vorliegen. Die Karte kann beispielsweise ortsbezogen sein oder auch nur topologische Nachbarschaftsinformationen enthalten. In der Karte sind die lokalen Verbindungen dargestellt. Es ist dann darin verzeichnet, auf welchen Pfaden lokale Verbindungen vorliegen. Die Auflösung der Karte ist in vorteilhafter Weise adaptiv gesteuert. Die an einer der Routingknotenstellen in Fig. 3 dargestellten Pfeile symbolisieren Kommunikationspfadqualitätsgewichtungen.

Die Sendefeldstärke der Sendeeinheiten von Mobilfunk-Teilnehmern wird in vorteilhafter Weise eingestellt oder geregelt, um die Anzahl/Maximalanzahl der lokal erreichbaren Teilnehmer zu steuern.

Mit dem hierin offenbarten Verfahren lassen sich vorteilhafte Telekommunikationsmanagementfunktionen verbinden.

Es lassen sich Informationen über lokale Auslastungssituationen und Verbindungssituationen, Adressierungsinformationen und sonstige übertragungsrelevante Größen, insbesondere Datenstauprognosen, innerhalb von Quellengruppen ablegen und dort aufrecht erhalten (Persistenz).

Auf dem gesamten Telekommunikationsnetzwerk können in vorteilhafter Weise Quellengruppen für sogenannte Homezones zur Adressierungsverwaltung gebildet werden, wobei jeder Teilnehmer im Laufe der Zeit für sich eine oder mehrere Homezones ermittelt, in welcher/welchen er sich oft befindet. Dies bedeutet, daß dort die Antreffwahrscheinlichkeit des jeweiligen Teilnehmers besonders hoch ist. Wenn sich ein Teilnehmer aus seiner Homezone entfernt, broadcastet er seinen ungefähren Aufenthaltsraum in seine jeweilige Homezone oder seine Homezones. Im Laufe der Zeit verteilen sich die Informationen bezüglich der Homezones der Teilnehmer über das gesamte Telekommunikationsnetzwerk sehr schnell. Da diese Informationen weitgehend konstant sind, besteht kaum ein Aktualisierungsbedarf. Somit finden Teilnehmeradreßanfragen zumindest immer sehr schnell in die Homezones, in welchen die ungefähre aktuelle Position des betreffenden Teilnehmers dann bekannt ist. Zum Aufspüren und zur genauen Ermittlung der Position eines Teilnehmers wird dann diese Information ausgenutzt und eine gezielte Area-Broadcast-Sequenz ausgesandt. Bei einem Wechsel oder einer Aufgabe einer Homezone seitens eines Teilnehmers erfolgt in zweckmäßiger Weise ein langsames Herausnehmen der Information aus dem Datenbestand mit Umverweisen auf eine gegebenenfalls neue Homezone.

Im extremen Ausgangszustand, der in der Praxis kaum vorkommt, wäre ein Teilnehmer im Telekommunikationsnetzwerk noch nahezu unbekannt. Der Rechner des Teilnehmers sendet in einem solchen Falle lediglich einen Elementar-Broadcast in eine sehr kleine Umgebung aus. Eine allererste Anfrage eines anderen Rechners würde als Breitensuche in Form einer Area-Broadcast-Sequenz über einen Großteil des Telekommunikationsnetzwerkes laufen, was aber unwahrscheinlich ist. Wahrscheinlich ist, daß sich der Teilnehmer schon nach kürzester Initialisierungsphase in eine Homezone einträgt und sich eine Spur mit Rückverweisungen durch das Netzwerk zieht.

Bei Speicherknappheit kann ein Teilnehmer jeweils veraltete Daten aus seinem Cache-Speicher entfernen, und es kann, wenn bekannt ist, daß auch benachbarte Teilnehmer die Information speichern, die Aufnahme der Daten in den Cache-Speicher mit einer Wahrscheinlichkeit kleiner als 100 % angenommen werden. Es können im Telekommunikationsnetzwerk auch Backbone-Teilnehmer eingestreut werden, die eine höhere Speicherkapazität enthalten. Bei den vergleichsweise geringen Informationsmengen und den großen heute zur Verfügung stehenden Speichern dürfte allerdings eine Speicherknappheit ohnehin kaum ein Problem sein.

Da ein Telekommunikationsnetzwerk niemals dauerhaft zu 100 % genutzt wird, ist ein dezentral arbeitendes Telekommunikationsnetzwerk auch in der Lage, freie lokale Übertragungskapazität ständig zu nutzen, um Gruppeninformation beispielsweise über neue Teilnehmer aktiv über das Netz zu treiben. Die Feststellung ist wichtig, daß die hochredundante, scheinbar uneffektive Kommunikationsform eines dezentralen Netzmanagements sich nur bei wenigen Basisdiensten, wie z.B. bei der Homezone-Einrichtung und der ersten Adreßinformationsverbreitung, niederschlägt, dann aber ganz schnell wieder ein sehr gerichtetes Vorgehen stattfindet. Für die Basisdienste stehen bei weitem immer ausreichend Ressourcen zur Verfügung, da dafür freie Ressourcen abgegriffen werden können, weil kein Telekommunikationsnetzwerk fortwährend zu 100 % ausgelastet ist.

In jedem Routing-Knoten wird eine begrenzte Anzahl von Einträgen gespeichert. Stärkere Routing-Knoten mit mehr Speicherplatz, d.h. Knoten, die eine höhere Zahl von Einträgen cache-speichern können, lassen sich beliebig im Netz verteilen oder hinter "echten" Backbone-Netzwerken verstecken. Solche Knoten haben aber strenggenommen nichts mit einer zentralen Verwaltung zu tun. Die Standorte solcher Knoten sind beliebig ein- und ausbaubar und das Abgreifen deren besonderer Zusatzpotentiale geschieht vollautomatisch und dynamisch.

Bei Auftreten eines Fehl-Routings erfolgt in zweckmäßiger Weise eine Fehler-Rückleitung (Error Backpropagation). Dadurch werden in schneller Weise falsche und/oder nicht mehr aktuelle Karten- und Verzeichniseinträge aus dem Datenbestand genommen.

Im folgenden wird auf den Begriff "Karte" eingegangen, was erforderlich erscheint, um den wesentlichen Applikationsformen, auf die das Verfahren nach der Erfindung abzielt, gerecht zu werden. Grundsätzlich können anstelle von Karten auch entsprechend aufgebaute Verzeichnisse bei den Teilnehmern oder in netzwerkexternen Speichern als Informationsträger vorgesehen werden.

Anhand von Fig. 4 wird in diesem Zusammenhang auf ein Beispiel mit dezentraler Mobilfunk-Kommunikation eingegangen. In Fig. 4 ist eine Situation dargestellt, wie über eine Szene mit einer großen Anzahl von dezentralen Mobilfunk-Kommunikationsteilnehmern, die als kleine Kreise dargestellt sind, ein Kommunikationsmomentenfeld gelegt wird. Jeder größere Kreis in der Karte symbolisiert beispielsweise eine kontinuisierte Verbindungsqualitäteneinheit, welche, gemittelt über die explizite Vor-Ort-Situation der einzelnen diskreten Teilnehmer, die Verbindungssituation der Zoneneinheit zur Übertragung von Datenpaketen über sie hinweg darstellt. Lange Pfeile nach rechts bedeuten z.B. eine große freie Übertragungskapazität. Der fett dargestellte, große Kreis auf der rechten Seite von Fig. 4 zeigt eine höhere Hierarchiestufe/Vergröberung von Momentenzellen. Aus mehreren Zellen wird durch Mittelung bzw. allgemein durch eine Aggregation je nach Größe eine Überzelle gebildet, d.h. es erfolgt eine Kartendatenkompression.

Auf dieser Kartenstruktur läßt sich somit in vorteilhafter Weise eine Kombination aus Information und Kurzweg-Algorithmus realisieren.

Die Dimensionen von Momenteneinheiten können beispielsweise sein: Position, Winkel, Gesamtübertragungskapazität, im Mittel genutzte Übertragungskapazität, Teilnehmerdichte, mittlerer lokaler Senderadius, zeitliche Fourierintegrale voriger Größen (Erfassung periodischer Schwankungen über den Tagesverlauf hinweg) und örtliche Gefälle in der Zelle.

An dieser Stelle ist anzumerken, daß auch Anwendungen mit dreidimensionalen Kartenräumen bei dem hierin offenbarten Verfahren eingeschlossen sein sollen. Auf Festnetzen beispielsweise würden jedoch in der ersten Stufe gewöhnliche, eindimensional unterstrukturierte Karten wie bei der Verkehrsleitung ausreichen.

## Patentansprüche

1. Verfahren zum dezentralen Übertragen und Verteilen von Nutzdaten zwischen Teilnehmern eines eine Vielzahl von mobilen und/oder stationären Teilnehmern aufweisenden, selbstverwaltenden Telekommunikationsnetzwerks oder Telekommunikationsteilnetzwerks, das die folgenden Schritte aufweist:
iteratives Weiterleiten von Nutzdaten zwischen den Teilnehmern;
Auslösen einer Kommunikation zweiter Ordnung von Anfragedaten aufgrund der Kommunikation von Nutzdaten, wobei mittels der Kommunikation zweiter Ordnung Netzwerkstrukturdaten ermittelt und/oder aktualisiert werden;
iteratives Weiterleiten der Anfragedaten, wobei die Anfragedaten explizite Anfragen über Netzwerkstrukturdaten beinhalten, so dass mittels ihnen aktiv das Erzielen von Netzwerkstrukturdaten einleitbar ist; und
Berechnen von geeigneten Kommunikationspfaden zum iterativen Weiterleiten von Nutzdaten anhand von Netzwerkstrukturdaten, welche lokal aufgrund von vorhergehenden Kommunikationsvorgängen zur Verfügung stehen oder durch Anfragen erzielt werden,
***dadurch gekennzeichnet, dass***
die geeigneten Kommunikationspfadezum Weiterleiten von Nutzdaten durch ein iteratives Wechselwirken aus Anfragen an vorläufig als optimal angesehenen Pfadelementen und aus einem Neuberechnen von optimalen Pfaden aufgrund von neuen und/oder korrigierten Daten erzielt werden.

2. Verfahren nach Anspruch 1, wobei Netzwerkstrukturdaten Teilnehmerdichten, Pfadqualitätsgewichtungen und Aufenthaltsorte beinhalten und in Karten oder Verzeichnissen gehalten werden.

3. Verfahren nach Anspruch 2,wobei die Karten bzw. Verzeichnisse als verteilte Karten bzw. verteilte Verzeichnisse der Teilnehmer realisiert sind und in bezüglich dem Telekommunikationsnetzwerk bzw. dem Telekommunikationsteilnetzwerk externen Speichern gehalten werden.

4. Verfahren nach Anspruch 2 oder 3, wobei Orte, Verbindungen und Einträge in den Karten bzw. Verzeichnissen repräsentiert sind.

5. Verfahren nach einem der Ansprüche 2 bis 4, wobei Orte und Gebiete der Karten bzw. Verzeichnisse in geometrischen Räumen und/oder in topologischen Räumen oder Graphen aufgefasst werden, in denen lediglich Nachbarschaften definiert sind.

6. Verfahren nach einem der Ansprüche 2 bis 5, wobei die Karten bzw. Verzeichnisse derart hierarchisch aufgebaut sind, dass weiter entfernte Gebiete in einer komprimierten, gröberen Auflösung repräsentiert sind.

7. Verfahren nach einem der Ansprüche 2 bis 6, wobei die Karten bzw. Verzeichnisse Teilnehmerdichten, einen Auslastungsgrad, Pfadqualitäten, n-te Momente von diesen, Aufenthaltsorte und Telefonbücher beinhalten.

8. Verfahren nach einem der vorhergehenden Ansprüche, wobei bei einem Verdichten von Netzwerkstrukturdaten aus ungerichteten Skalaren höhere Momente dieser Skalare berechnet werden, wodurch gerichtete Größen entstehen, die momentenbezogene Pfadqualitätsgewichtungen beinhalten.

9. Verfahren nach einem der vorhergehenden Ansprüche, wobei Antworten auf Anfragen bei auf dem Übertragungsweg liegenden Teilnehmern in einem Cache-Speicher gespeichert werden und dann, wenn Anfragen auf geeignete in einem Cache-Speicher gespeicherte Antworten auf Anfragen treffen, die eine ausreichende Aktualität aufweisen, die Anfragen direkt aus dem Cache-Speicher beantwortet werden.

10. Verfahren nach einem der vorhergehenden Ansprüche, wobei eine Auswahl einer geeigneten Weiterleitung von Nutzdaten dezentral abgestimmt wird.

11. Verfahren nach einem der vorhergehenden Ansprüche, wobei Backbone-Strecken und/oder Backbone-Netzwerke in das Telekommunikationsnetzwerk oder Telekommunikationsteilnetzwerk eingebunden werden und/oder das Telekommunikationsnetzwerk oder Telekommunikationsteilnetzwerk an ein oder mehrere andere Telekommunikationsnetzwerke angekoppelt wird.

12. Verfahren nach einem der vorhergehenden Ansprüche, wobei im Fall einer Funkübertragung die Sendefeldstärke von Sendeeinheiten der Teilnehmer jeweils derart eingestellt oder geregelt wird, um die Anzahl/Maximalanzahl von lokal erreichbaren Teilnehmern zu steuern.

13. Verfahren nach einem der vorhergehenden Ansprüche, wobei Informationen über lokale Auslastungssituationen und Verbindungssituationen, Adressierungsinformationen und sonstige übertragungsrelevante Größen, die Datenstauprognosen beinhalten, innerhalb von Quellengruppen abgelegt und dort aufrechterhalten werden.

14. Verfahren nach Anspruch 13, wobei:
auf dem gesamten Telekommunikationsnetzwerkoder Telekommunikationsteilnetzwerk Quellengruppen für Homezones zur Adressierungsverwaltung gebildet werden;
jeder Teilnehmer für sich eine oder mehrere Homezones ermittelt, in welcher/welchen er sich oft befindet und bei der eine Antreffwahrscheinlichkeit des jeweiligen Teilnehmers besonders hoch ist, und
ein Teilnehmer dann, wenn er sich aus seiner Homezone oder aus einer seiner Homezones entfernt, seinen ungefähren Aufenthaltsraum in seine jeweilige Homezone oder seine Homezones als Information übermittelt, wodurch Teilnehmeradressenanfragen in die Homezones finden, wobei eine in der Homezone oder den Homezones bekannte Information über den ungefähren Aufenthaltsraum zum Erfassen und genauen Ermitteln der Position des Teilnehmers verwendet wird und eine gezielte Area-Broadcast-Sequenz ausgesendet wird.

15. Verfahren nach einem der vorhergehenden Ansprüche, wobei in den Anfragen eine Aktualitätsanforderung eincodiert ist, die sich aus einer Gewichtigkeitsabschätzung ergibt, die Engpässe, eine Bandbreite von Routenabschnitten und eine Entfernung vom Anfrageort betrifft.

16. Verfahren nach einem der vorhergehenden Ansprüche, wobei das Verfahren auf sich selbst angewendet wird, wodurch allgemein eine selbstorganisierende Bewegungs/Kommunikationsoptimierung n-ter Ordnung erzielt wird.

## Claims

1. Method for decentralized transmission and distribution of user data between subscribers in a self-administering telecommunications network or telecommunications sub-network which has a large number of mobile and/or stationary subscribers, comprising the following steps:
iteratively passing user data between the subscribers;
stimulating second-order communication of explorer data on the basis of the user data communication, wherein by the second-order communication network structure data are determined and/or refreshed;
iteratively transmitting the explorer data, wherein the explorer data contain explicit requests relating to network structure data, so that by means of them obtaining network structure data can actively initiated; and
calculating suitable communication paths for passing on user data iteratively on the basis of network structure data which are already available locally on the basis of previous communications processes or which are obtained by requests,
***characterized in that***
the suitable communication paths for passing on user data are determined by iterative interaction from requests to path elements which are provisionally regarded as being optimum and re-calculations of optimum paths on the basis of new and/or corrected data.

2. Method according to claim 1, wherein network structure data contain subscriber densities, path quality weightings and locations and are maintained in charts or lists.

3. Method according to claim 2, wherein the charts or lists are in the form of distributed charts or distributed lists of subscribers and are also be maintained in external memories as regards the telecommunications network or the telecommunications sub-network.

4. Method according to claim 2 or 3, wherein locations, connections and entries are represented in the charts or lists.

5. Method according to one of claims 2 to 4, wherein locations and regions of the charts or lists are in the form of geometric areas and/or topological areas or graphs in which only neighbourhoods are defined.

6. Method according to one of claims 2 to 5, wherein the charts and lists are hierarchically structured such that long-distance regions are represented using a compressed, coarser resolution.

7. Method according to one of claims 2 to 6, wherein the charts or lists include subscriber densities, utilization level, path qualities, n-th moments of these, locations and telephone directories.

8. Method according to one of the preceding claims, wherein when network structure data are compressed from non-directional scalars, higher moments of these scalars are calculated, as a result of which directional variables including moment-related path quality weightings are obtained.

9. Method according to one of the preceding claims, wherein answers to requests are stored in cache memories at subscribers located on the transmission path and when requests get together with suitable answers to requests stored in a cache memory which answers have an adequate up-to-dateness, the requests are satisfied directly from the cache memories.

10. Method according to one of the preceding claims, wherein selection of suitable routing of the user data is de-centrally adjusted.

11. Method according to one of the preceding claims, wherein backbone paths and/or backbone networks are included in the telecommunications network or telecommunications sub-network, and/or the telecommunications network or the telecommunications sub-network is coupled to one or more other telecommunications networks.

12. Method according to one of the preceding claims, wherein for radio transmission, the transmission field strength of transmission units of the subscribers is in each case set or regulated in order to control the number/maximum number of locally accessible subscribers.

13. Method according to one of the preceding claims, wherein information about local utilization situations and connection situations, addressing information and other transmission-relevant variables, comprising data bottleneck predictions, are stored within source groups and maintained there.

14. Method according to claim 13, wherein:
source groups for home zones are formed for addressing administration on the entire telecommunications network or telecommunications sub-network;
each subscriber himself determines one or more home zones in which he is often located and in which the hit probability of the respective subscriber is particularly high; and
a subscriber, when he is away from his home zone or from one of his home zones, transmits his approximate location area to his respective home zone or his home zones as information, so that subscriber address requests are redirected to the home zones, wherein information about the approximate position which is known in the home zone or the home zones is used for tracing and accurately determining the position of the subscriber, and a specific area broadcast sequence is transmitted.

15. Method according to one of the preceding claims, wherein in the requests a data up-to-dateness requirement is encoded which results from a weighting estimate which relates to frequent bottlenecks, a bandwidth of route sections and a distance from request location.

16. Method according to one of the preceding claims, wherein the method being applied to itself to thereby generally result in a self-organizing, n-th order movement/communication optimization process.

## Revendications

1. Procédé de transmission décentralisée et de distribution de données utiles entre des abonnés d'un réseau de télécommunication ou d'un réseau partiel de télécommunication à gestion automatique, qui comporte une multiplicité d'abonnés mobiles et/ou fixes, qui comprend les étapes suivantes :
la transmission itérative de données utiles entre les abonnés;
le déclenchement d'une communication du second ordre de données de demandes sur la base de la communication de données utiles, auquel cas des données de structure de réseau sont déterminées et/ou actualisées au moyen de la communication du second ordre;
la transmission itérative des données de demandes, les données de demandes contenant des demandes explicites concernant des données de structures de réseaux de sorte qu'à l'aide de ces données, on peut déclencher d'une manière active l'obtention de données de structures du réseau; et
le calcul de voies appropriées de communication pour la transmission itérative de données utiles sur la base de données de structures du réseau, qui sont disponibles localement sur la base de processus précédents de communication ou sont obtenues au moyen de demandes,
**caractérisé en ce que**
les voies appropriées de communication pour la transmission de données utiles au moyen d'une interaction itérative à partir de demandes concernant des éléments de trajet considérés provisoirement comme optimum et à partir d'un nouveau calcul de trajets optimum sur la base de données nouvelles et/ou corrigées.

2. Procédé selon la revendication 1, selon lequel des données de structure du réseau contiennent des densités d'abonnés, des pondérations de la qualité de trajet et des lieux de séjour et sont conservées dans des cartes ou des répertoires.

3. Procédé selon la revendication 2, selon lequel les cartes ou les répertoires sont réalisés sous la forme de répertoires distribués des abonnés et sont conservés dans des mémoires externes par rapport au réseau de télécommunication ou réseau partiel de télécommunication.

4. Procédé selon la revendication 2 ou 3, dans lequel des lieux, des liaisons et des entrées sont représentés sur les cartes ou dans les répertoires.

5. Procédé selon l'une des revendications 2 à 4, dans lequel des lieux et des zones des cartes ou des répertoires sont recensés dans des espaces géométriques et/ou dans des espaces topologiques ou des graphiques, dans lesquels sont définis uniquement des voisinages.

6. Procédé selon l'une des revendications 2 à 5, selon lequel les cartes ou les répertoires sont agencés de façon hiérarchique de telle sorte que des données plus éloignées sont représentées avec une résolution comprimée plus grossière.

7. Procédé selon l'une des revendications 2 à 6, dans lequel les cartes ou les répertoires contiennent des densités d'abonnés, un degré de charge, des qualités de trajets, des n-èmes moments de ces derniers, des lieux de séjour et des annuaires téléphoniques.

8. Procédé selon l'une des revendications précédentes, selon lequel lors d'une compression de données de structures de réseaux, à partir de scalaires non orientés, on calcule des moments plus élevés de ces scalaires, ce qui fait apparaître des grandeurs orientées, qui contiennent les pondérations de qualité de trajet rapportées au moment.

9. Procédé selon l'une des revendications précédentes, dans lequel des réponses à des demandes dans le cas d'abonnés situés sur le trajet de transmission, sont mémorisées dans une mémoire cache et, lorsque des demandes à des réponses appropriées mémorisées dans une mémoire cache rencontrent des demandes qui possèdent une actualité suffisante, une réponse aux interrogations est fournie directement à partir de la mémoire cache.

10. Procédé selon l'une des revendications précédentes, selon lequel un choix d'une transmission appropriée de données utiles est accordé d'une manière décentralisée.

11. Procédé selon l'une des revendications précédentes, selon lequel des sections d'ossature et/ou des réseaux d'ossature sont liés dans le réseau de télécommunication ou dans le réseau partiel de télécommunication et/ou le réseau de télécommunication ou le réseau partiel de télécommunication est couplé à un ou plusieurs autres réseaux de télécommunication.

12. Procédé selon l'une des revendications précédentes, selon lequel dans le cas d'une transmission par radio, l'intensité du champ d'émission d'unités d'émission des émetteurs est respectivement ajustée ou réglée de manière à commander le nombre/le nombre maximum d'abonnés pouvant être atteints localement.

13. Procédé selon l'une des revendications précédentes, selon lequel des informations concernant des situations locales de charge et des situations locales de liaison, des informations d'adressage et d'autres grandeurs importantes pour la transmission, qui contiennent des pronostics d'accumulation de données, sont mémorisées dans des groupes sources et y sont maintenues.

14. Procédé selon la revendication 13, selon lequel :
des groupes sources sont des zones d'habitation pour la gestion de l'adressage sont formées dans l'ensemble du réseau de communication du réseau partiel de communication;
chaque abonné détermine en soi une ou plusieurs zones d'habitation, dans laquelle ou dans lesquelles il est fréquemment situé et dans laquelle une probabilité d'atteindre l'abonné respectif est particulièrement élevée, et
lorsqu'il s'éloigne de sa zone d'habitation ou de ses zones d'habitation, un abonné transfère sa zone de séjour approximative dans sa zone respective de séjour ou dans ses zones de séjour en tant qu'information, ce qui a pour effet que les demandes d'adresses d'abonnés sont situées dans les zones de séjour, auquel cas une information connue dans la zone de séjour ou dans les zones de séjour et concernant la zone de séjour approximative pour détecter et déterminer de façon précise la position de l'abonné, et une séquence ciblée de diffusion de zone est émise.

15. Procédé selon l'une des revendications précédentes, selon lequel dans les demandes est introduite de façon codée une demande d'actualité, qui est obtenue à partir d'une estimation de l'importance, qui concerne les étranglements, une largeur de bande de sections de routes et un éloignement par rapport à l'emplacement de demande.

16. Procédé selon l'une des revendications précédentes, selon lequel le procédé est utilisé en soi de façon automatique, ce qui permet d'obtenir d'une manière générale une optimisation de déplacement/de communication du n-ème ordre, qui s'organise de façon automatique.
